# EUROPEAN PATENT SPECIFICATION

(11) **EP 2 072 363 B1**
(45) Date of publication and mention of the grant of the patent: **24.07.2013**
(21) Application number: 07123489.2
(22) Date of filing: 18.12.2007
(51) Int. Cl.: B60T 13/74, B60T 17/22

(54) **Method and device for controlling the intervention of the electric parking brake of a vehicle, in condition of dynamic functioning**
Verfahren und Vorrichtung zur Steuerung des Eingriffs der elektrischen Parkbremse eines Fahrzeugs in dynamischem Funktionszustand
Procédé et dispositif pour le contrôle de l'intervention du frein à main électrique d'un véhicule dans une condition de fonctionnement dynamique

(43) Date of publication of application: 24.06.2009
(73) Proprietor: IVECO S.p.A., 10156 Torino (IT)
(72) Inventor: Fisanotti, Giovanni, 10014 Caluso (IT)
(74) Representative: Borsano, Corrado

(56) References cited:
- EP-A- 1 231 118

## Description

This invention refers to a method and device for controlling the intervention of the electric parking brake of a vehicle, in condition of dynamic functioning.

Some vehicles are equipped with an electric parking brake, that usually consists of an electric motor that may pull or release the brake cable (replacing the manual activation by means of a lever) which activates the brakes.

Usually it is activated by means of an electric control, for example by pressing a button on the dashboard, or by an automatic control in certain operating conditions of the vehicle. A state of the art electromechanical parking brake is described in EP 1 231 118 A2.

The electric parking brake traditionally has two types of functioning:
- a first type of static functioning, in which the brake is activated when the vehicle is stationary, in order to guarantee that the vehicle keeps still;
- a second type of dynamic functioning, in which the brake is used as an emergency brake when the vehicle is in motion, for example in case of failure of the service brake.

The functioning of the parking brake may be controlled electronically, in order to check the conditions which determine its intervention and the way it intervenes.

In the dynamic functioning, it is known that the electronic control determines the intervention of the electric parking brake in case of failure of the service brake, with the function to replace or to help it.

The parking brake may also intervene in order to help the service brake, in case the system detects a panic braking, due to the presence of a sudden danger.

It is known that the intervention of the electric parking brake may be controlled by means of devices traditionally present on the vehicle, such as ABS or ESP, in order to avoid or to minimize the skid of the wheels on which the brake is operating. The ESP already comprises a pressure sensor, which measures the pressure in the hydraulic circuit, but above all the variation of the pressure with the time, in order to evaluate whether the driver brakes in panic or not.

However some conditions of danger are generated by an improper use of the parking brake, for example when the driver uses it in a dynamic way even when it is not necessary, because the service brake functions properly. For example in case of frequent and quick braking, for a fast unloading of goods, the parking brake is activated by the driver with the vehicle still moving.

Therefore, the aim of this invention is to overcome the drawbacks mentioned above and to provide a method and device for controlling the intervention of the electric parking brake of a vehicle, in condition of dynamic functioning, which avoids the improper use.

According to the invention, the intervention of the electric parking brake of a vehicle, in condition of dynamic functioning, is prevented in case of improper use. The intervention of the parking brake is regulated according to the operative conditions of the service brake, that is to say the dynamic braking with the parking brake is not possible if the service brake functions properly.

This invention refers in particular to a method and device for controlling the intervention of the electric parking brake of a vehicle, in condition of dynamic functioning as described more fully in the claims, which are an integral part of this description.

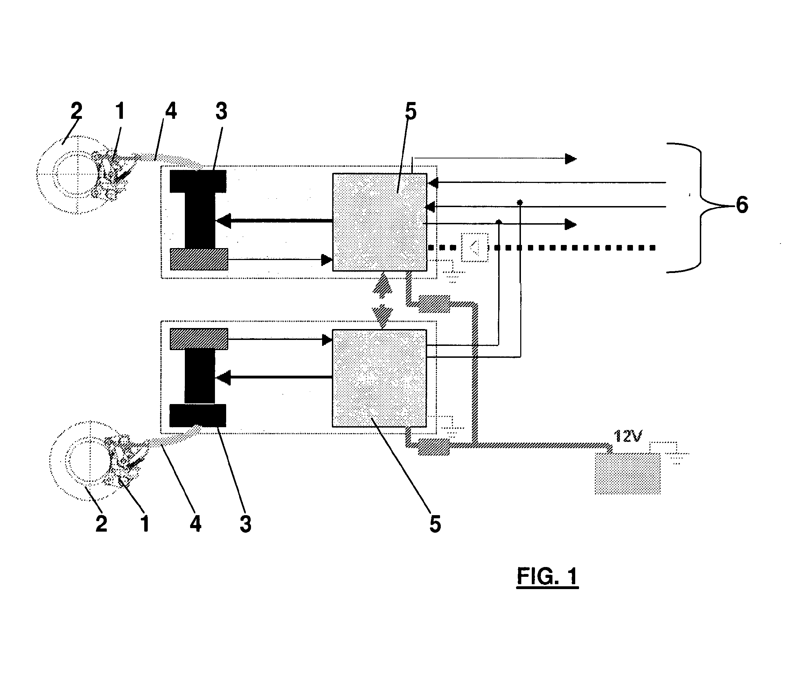

The purposes and advantages of this invention will be clear from the detailed description that follows of an example of embodiment thereof (and of its variants) and from the drawings provided for example purposes only and not to be considered restrictive, in which the figure 1 illustrate an embodiment scheme of the device to which this invention refers.

According to the main aspect of this invention, the intervention of the electric parking brake of a vehicle, in condition of dynamic functioning, is prevented in case of improper use.

The control preventing the improper use is preferably based on the detection of the fluid pressure in the service braking circuit. If the value of the pressure exceeds a predetermined threshold, the dynamic functioning of the parking brake is prevented.

As regards the device, with reference to figure 1, the parking brake 1 operates on a pair of wheels 2, and is activated by means of a single electric motor, or of one electric motor 3 per wheel, which pulls or releases its own brake cable 4.

Each electric motor is controlled by an electronic control unit 5 which collects the signals 6 of the various sensors of the vehicle. For example, one of these signals comes from the control of the pressure level in the hydraulic circuit of the service brakes. This signal is traditionally present and is used by the ABS and ESP devices of the vehicle.

Then the vehicle control unit compares this signal with a threshold pressure value. If the signal exceeds the threshold, the control unit prevents the dynamic intervention of the parking brake, otherwise the control unit allows the intervention of the parking brake.

The electronic control unit is programmed in a way known in the prior art, for example using the usual programming language for vehicle control units, but an additional part of the program carries out the method according to the invention. Therefore the method according to this invention can be applied advantageously by means of a computer program, which comprises program code means performing one or more steps of said method, when said program is run on a computer. For this reason the scope of the present invention is meant to cover also said computer program and the computer-readable medium that comprises a recorded message, such computer-readable medium comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for controlling the intervention of the electric parking brake of a vehicle, in condition of dynamic functioning, **characterized in that** it comprises a step of prevention of the intervention of the electric parking brake in case of proper functioning of the service brake of the vehicle.

2. Method according to claim 1, **characterized in that** said prevention is based on the detection of the fluid pressure in the service braking circuit, and on the condition of the pressure value exceeding a predetermined threshold.

3. Device for controlling the intervention of the electric parking brake of a vehicle, in condition of dynamic functioning, **characterized in that** it comprises means for preventing the intervention of the electric parking brake in case of proper functioning of the service brake of the vehicle.

4. Device according to claim 3, **characterized in that** said means for preventing comprise means for detecting the fluid pressure in the service braking circuit, and for controlling the condition of the pressure value exceeding a predetermined threshold.

5. Computer program comprising program code means suitable for performing the steps of claims 1 or 2, when such program is run on a computer.

6. Computer-readable means comprising a recorded program, said computer-readable means comprising program code means suitable for performing the steps according to claims 1 or 2, when said program is run on a computer.

## Patentansprüche

1. Verfahren zur Steuerung des Eingriffs der elektrischen Parkbremse eines Fahrzeugs in dynamischem Fahrzeugzustand, **dadurch gekennzeichnet, dass** es einen Schritt zum Vermeiden des Eingriffs der elektrischen Parkbremse aufweist, für den Fall einer korrekten Funktion der Betriebsbremse des Fahrzeugs.

2. Verfahren nach Anspruch 1, **dadurch gekennzeichnet, dass** die Vermeidung auf dem Erkennen des Flüssigkeitsdrucks im Betriebsbremsenkreis und auf dem Zustand des Druckwertes, der einen vorbestimmten Grenzwert überschreitet, basiert.

3. Vorrichtung zur Steuerung des Eingriffs der elektrischen Parkbremse eines Fahrzeugs in dynamischem Funktionszustand, **dadurch gekennzeichnet, dass** sie Mittel zum Vermeiden des Eingriffs der elektrischen Parkbremse aufweist, im Fall der korrekten Funktion der Betriebsbremse des Fahrzeugs.

4. Vorrichtung nach Anspruch 3, **dadurch gekennzeichnet, dass** die Mittel zum Vermeiden Mittel zum Erkennen des Flüssigkeitsdrucks im Betriebsbremsenkreis und zum Steuern des Zustands des Druckwertes aufweisen, der einen vorbestimmten Grenzwert übersteigt.

5. Computerprogramm aufweisend Programmcodemittel geeignet zum Ausführen der Schritte der Ansprüche 1 oder 2, wenn das Programm auf einem Computer läuft.

6. Computerlesbares Medium aufweisend ein gespeichertes Programm, wobei die computerlesbaren Mittel Programmcodemittel aufweisen, die geeignet sind, die Schritte nach Ansprüchen 1 oder 2 auszuführen, wenn das Programm auf einem Computer ausgeführt wird.

## Revendications

1. Méthode pour le contrôle de l'intervention du frein à main électrique d'un véhicule dans une condition de fonctionnement dynamique, **caractérisé en ce qu'**il comprend une étape de prévention de l'intervention du frein à main électrique dans le cas d'un fonctionnement approprié des freins de service du véhicule.

2. Procédé selon la revendication 1, **caractérisé en ce que** ladite étape de prévention est basée sur la détection de la pression de fluide dans le circuit de frein de service, et sur la condition où la valeur de pression excède un seuil prédéterminé.

3. Dispositif pour le contrôle de l'intervention du frein à main électrique d'un véhicule, dans une condition de fonctionnement dynamique, **caractérisé en ce qu'**il comprend des moyens pour prévenir l'intervention du frein à main électrique dans le cas d'un fonctionnement approprié des freins de service du véhicule.

4. Dispositif selon la revendication 3, **caractérisé en ce que** lesdits moyens pour prévenir comprennent des moyens pour détecter la pression de fluide dans le circuit de frein de service, et pour contrôler la condition où la valeur de pression excède un seuil prédéterminé.

5. Programme d'ordinateur comprenant des moyens de code de programme agencés pour effectuer les étapes des revendications 1 ou 2, lorsqu'un tel programme est exécuté sur un ordinateur.

6. Moyens lisibles par un ordinateur comprenant un programme enregistré, lesdits moyens lisibles par un ordinateur comprenant des moyens de code de programme agencés pour effectuer les étapes selon les revendications 1 ou 2, lorsque ledit programme est exécuté sur un ordinateur.
